# FASCICULE DE BREVET EUROPEEN

(11) **EP 2 382 396 B1**
(45) Date de publication et mention de la délivrance du brevet: **29.05.2013**
(21) Numéro de dépôt: 09803873.0
(22) Date de dépôt: 16.12.2009
(51) Int. Cl.: F16B 19/02

(54) **METHODE DE POSITIONNEMENT DE PIECES MECANIQUES**
VERFAHREN ZUR POSITIONIERUNG VON MECHANISCHEN TEILEN
METHOD FOR POSITIONING MECHANICAL PARTS

(30) Priorité: 28.01.2009 FR 0950496
(43) Date de publication de la demande: 02.11.2011
(73) Titulaire: Peugeot Citroën Automobiles SA, 78140 Vélizy-Villacoublay (FR)
(72) Inventeur: VIDAL, Olivier, F-42170 Saint Just Saint Rambert (FR)
(86) Numéro de dépôt international: PCT/FR2009/052564
(87) Numéro de publication internationale: WO 2010/086517

(56) Documents cités:
- JP-A- 10 169 503
- JP-A- 2006 177 454

## Description

La présente invention revendique la priorité de la demande française 0950496 déposée le 28 Janvier 2009 dont le contenu (texte, dessins et revendications) est ici incorporé par référence.

La présente invention concerne une méthode de positionnement d'au moins deux pièces mécaniques de fonderie ou de forge l'une par rapport à l'autre ainsi qu'un assemblage de pièces automobiles positionnées selon une telle méthode.

On connaît des méthodes destinées à immobiliser deux pièces mécaniques avant usinage ou, directement, en assemblage. De telles méthodes nécessitent la présence de goupilles de centrage, qui peuvent être soit pleines, soit creuses, de manière à permettre le passage d'un élément d'assemblage tel qu'une vis. Les goupilles sont emmanchées grâce à un outillage particulier dans chacun des trous de goupille ménagés dans les pièces à assembler. Les goupilles sont finalement soudées par pression, localement, dans les trous de goupille.

Le document brevet JP2005325909 divulgue des goupilles, qui présentent une fente sur toute leur longueur. De telles goupilles sont insérées dans des trous de goupille ménagés dans les pièces mécaniques à assembler. La fente crée un flux d'air ou de fluide, qui entraine la déformation élastique des goupilles sous la pression de sorte à immobiliser les deux pièces mécaniques tout en préservant une possibilité de démontage ultérieur desdites pièces.

Le document brevet JP2006177454 divulgue une goupille de positionnement comportant deux portions, chaque portion présentant une section différente pour l'assemblage d'un chapeau de vilebrequin et d'un bloc cylindre. La première portion présente une section ajustée au chapeau de vilebrequin et la seconde portion présente une section à moitié adaptée au bloc cylindre compte tenu des forces de pression plus élevée exercées par le chapeau de vilebrequin que par le bloc cylindre.

Toutefois, lors de la mise en oeuvre de telles méthodes de positionnement selon l'art antérieur, les goupilles sont susceptibles d'être endommagées. En effet, l'épaisseur de la toile d'une goupille est généralement de 0,5 mm. La goupille peut ainsi se plier très facilement lors de l'assemblage. Par ailleurs, on peut se heurter à des difficultés de montage lorsqu'on est en présence de deux goupilles en fonction de l'entraxe des deux trous lors de l'assemblage des deux pièces. Un tel ensemble hyperstatique conduit à des contraintes de précision en diamètre au niveau de chaque goupille et de chaque trou de goupille, et dans l'entraxe entre chacun des deux trous de goupille d'une même pièce en usinage.

De plus, l'utilisation de goupilles rend également difficile tout démontage, au moment de l'entretien des pièces par exemple. Il devient alors quasiment impossible de séparer lesdites pièces facilement, une séparation en force au moyen d'un outil approprié étant susceptible d'endommager les goupilles et/ou les trous de goupille. Par ailleurs, lors du démontage de deux pièces mécaniques assemblées au moyen de goupilles, les goupilles ne restent pas nécessairement positionnées dans la pièce souhaitée, mais dans l'autre pièce. Ainsi, l'utilisation de goupilles pour la conception de pièces mécaniques et de sous-ensembles mécaniques divers présente un manque de répétabilité au démontage en raison de la fragilité des goupilles, en particulier, lorsque ces goupilles sont creuses.

Enfin, en termes technico-économiques et d'ergonomie, l'utilisation de méthodes de positionnement et d'assemblage au moyen de goupilles nécessite la mise en oeuvre de machines en ligne de production destinées à positionner les goupilles dans une des pièces avant positionnement/assemblage, ainsi que la présence d'un opérateur supplémentaire, les goupilles étant assemblées en force dans les pièces. Il faut également gérer l'achat des goupilles et toute la logistique qui en découle.

Compte tenu de ce qui précède, un problème que se propose de résoudre l'invention est de réaliser une méthode de positionnement d'au moins deux pièces mécaniques de fonderie ou de forge l'une par rapport à l'autre, qui soit simple de mise en oeuvre, qui réponde aux contraintes de réduction des coûts de plus en plus contraignantes dans le domaine de l'invention, et qui offre des conditions d'assemblage/démontage plus fiables qualitativement. Ce système doit permettre de supprimer la goupille en faisant un bossage d'une forme extérieure au lieu d'un alésage. Ce système doit permettre également d'avoir un assemblage sans contrainte en un ensemble isostatique et de diminuer la précision d'usinage des entraxes de centrage. Enfin, ce système doit permettre de supprimer l'incertitude au démontage.

La solution de l'invention à ce problème a pour premier objet une méthode selon la revendication 1.

Elle a pour second objet un assemblage mécanique de pièces automobiles, selon la revendication 6.

De manière avantageuse, - préalablement au positionnement des pièces, ledit au moins un plot, intégré au brut de fonderie ou de forge, est usiné ; - ledit au moins un plot est sensiblement cylindrique de révolution ; - le plot externe mâle de positionnement est creux et un élément d'assemblage est introduit dans le creux dudit plot pour l'assemblage des pièces ; - le plot externe mâle de positionnement est en aluminium ; - les pièces sont des culasses, des carters moteurs, des porte-arbres à cames, des paliers d'arbre à came, des carters de boîte de vitesse ; - l'assemblage comprend une culasse et un chapeau de palier d'arbre à came double pont ; et - les pièces sont des pièces de support moteur ou des accessoires.

D'autres buts, avantages et caractéristiques de l'invention seront mieux compris à la lecture de la description des modes de réalisation préférés qui suivent, non limitatifs de l'objet et de la portée de la présente demande de brevet, et qui sont rédigés au regard des dessins annexés, dans lesquels :
- la figure 1 est une coupe transversale illustrant, de manière schématique, l'intégration d'un plot externe mâle de positionnement plein dans un brut de fonderie ou de forge d'une première des deux pièces à positionner selon l'invention ;
- la figure 2 est une coupe transversale illustrant, de manière schématique, un plot externe mâle de positionnement plein usiné de la première pièce ;
- la figure 3 est une vue de dessus illustrant, de manière schématique, un positionnement isostatique d'une pièce munie de deux plots externes mâles de positionnement délardés ;
- la figure 4 est, de manière schématique, une coupe transversale du positionnement et de l'assemblage d'une pièce dans une seconde pièce au moyen d'un plot externe mâle de positionnement plein ;
- la figure 5 est, de manière schématique, une coupe transversale du positionnement et de l'assemblage d'une pièce dans une seconde pièce au moyen d'un plot externe mâle de positionnement creux ;
- la figure 6 est un plan en deux dimensions d'une culasse comportant deux plots externes mâles de positionnement ;
- la figure 7 est une vue en trois dimensions d'une culasse comportant deux plots externes mâles de positionnement ; et
- la figure 8 est une vue d'une culasse comportant deux plots externes mâles de positionnement pleins et d'un chapeau de palier d'arbre à came double pont comportant deux orifices de plot femelles de positionnement.

L'invention concerne un procédé de positionnement d'au moins deux pièces mécaniques de fonderie ou de forge, par exemple de sous ensembles mécaniques, lesdites pièces étant positionnées l'une par rapport à l'autre au niveau de deux faces aptes à être mises en contact. Le procédé selon l'invention permet l'immobilisation et l'assemblage des deux pièces, par exemple avant usinage.

Les pièces et sous ensembles mécaniques peuvent se présenter sous toutes formes, plus ou moins complexes. Il s'agit cependant de structures métalliques. On peut citer, à titre d'exemple non limitatif, les pièces comprises dans un moteur et possédant au moins une surface de contact, telles qu'une culasse et un chapeau de palier d'arbre à came.

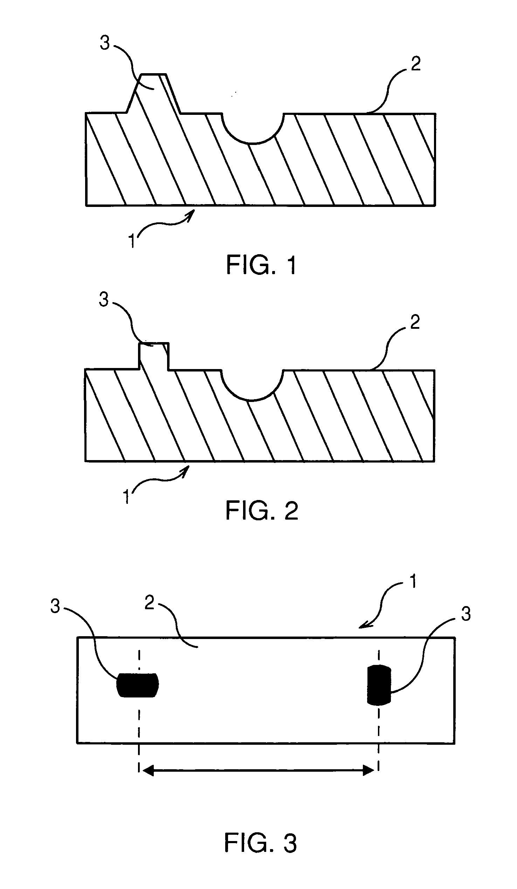

Si l'on se réfère à la figure 1, il apparaît que la première pièce 1 présente une face 2, sensiblement plane, sur laquelle est intégré un plot 3. Ce plot 3 est un plot externe mâle de positionnement. Il est intégré au brut de fonderie ou de forge de la pièce 3.

Le plot 3 est par exemple plein. Il constitue alors un bossage à la face 2 de la pièce 1. L'usinage d'un tel bossage est très aisé selon l'invention, en comparaison de l'usinage d'un alésage, nécessaire selon l'art antérieur, dans le cas d'un positionnement de pièces au moyen de goupilles. De plus, le plot 3 étant externe, l'usinage des plats pour limiter les portées est très facile pendant le fraisage de la face d'appui. On évite ainsi, par rapport à l'art antérieur, de réaliser un alésage et une indexation des goupilles de façon angulaire lors de l'assemblage des deux pièces ce qui simplifie considérablement les opérations de montage.

Le plot 3 est en tout métal communément utilisé pour les pièces mécaniques et les sous-ensembles mécaniques, identique à la pièce 1. Avantageusement, le plot 3 est en aluminium.

Le plot 3 peut se présenter sous toute forme apte à effectuer la correspondance avec un orifice de plot femelle de positionnement 6 de la deuxième pièce 4, et à assembler les deux pièces mécaniques 1, 4 l'une à l'autre. Dans des modes de réalisation particuliers selon l'invention, il se présente sous la forme de mortaises, rainures, cônes, stries. Néanmoins, il se présente préférentiellement sous la forme d'un cylindre de révolution.

Le plot 3 peut être de toute dimension, sensiblement complémentaire à l'orifice 6, nécessaire et suffisante pour permettre le positionnement, l'assemblage et l'immobilisation des deux pièces 1, 4 avant usinage. Le plot 3 se présente préférentiellement sous la forme d'un cylindre d'une hauteur comprise entre environ 1 et 50 mm, préférentiellement d'environ 4 mm, et d'un diamètre compris entre environ 0,2 et 30 mm, préférentiellement 6 mm.

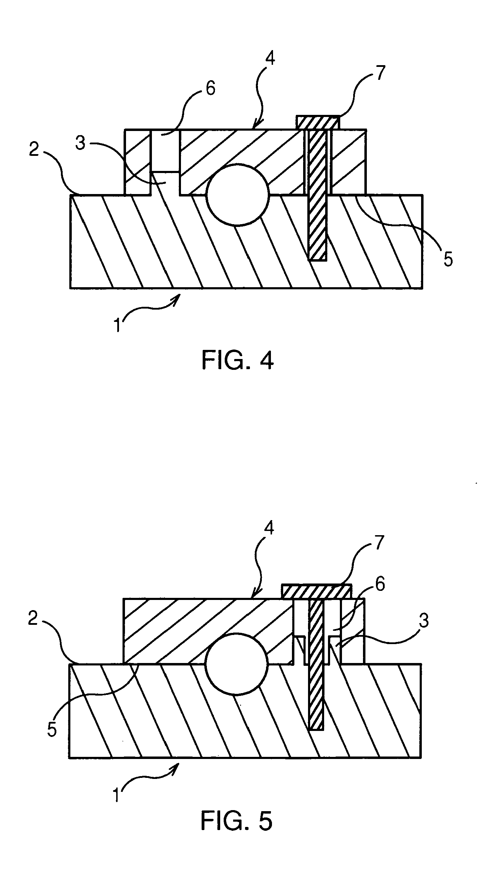

Le plot 3 est situé et intégré à la face de contact 2 de la pièce 1. Il est positionné à un endroit choisi et déterminé de cette face 2 de pièce 1, de sorte à effectuer la correspondance avec un orifice 6 situé sur une face de contact 5 de la deuxième pièce 4 tel qu'illustré à la figure 4. Le plot 3 permet de positionner les deux pièces 1, 4 l'une par rapport à l'autre de sorte à les assembler et les immobiliser avant usinage.

Ainsi que cela est illustré à la figure 2, le plot 3 est usiné de sorte à effectuer la correspondance avec l'orifice 6 de la deuxième pièce 4. De préférence, la contrainte usinage est choisie pour réaliser un plot 3 cylindrique, de diamètre précis et d'une hauteur suffisante pour l'assemblage des deux pièces mécaniques 1, 4. Un tel usinage permet l'obtention d'un diamètre de centrage adapté au positionnement et à l'assemblage desdites pièces.

L'usinage de la forme cylindrique des plots est aisé. Dans un exemple de réalisation, il est effectué au moyen de broches tournantes de machines-outils adaptées.

Avantageusement, et ainsi que cela est montré à la figure 3, la première pièces 1 comporte deux plots 3. Ces plots 3 sont délardés dans deux directions sensiblement orthogonales. La précision d'usinage des entraxes de centrage est alors réduite. Les contraintes, dans l'assemblage ainsi obtenu sont minimisée. L'ensemble des pièces assemblées est isostatique. Dans des variantes de réalisation, les orifices - et non pas les plots - sont délardés selon deux directions sensiblement orthogonales, l'ensemble des pièces assemblées étant dans ce cas de même avantageusement isostatique.
La figure 4 représente le positionnement et l'assemblage des pièces référencée 1 et 4 au niveau des deux faces 2, 5. Ces faces 2, 5 sont positionnées en regard l'une de l'autre. Le plot 3, situé sur la face de contact 2 de la pièce 1, effectue la correspondance avec l'orifice 6 situé sur la face de contact 5 de la deuxième pièce 4. Le plot 3, une fois engagé dans l'orifice 6 permet d'assembler et d'immobiliser les deux pièces 1, 4 avant usinage.
La figure 5 représente un autre mode de réalisation selon l'invention dans lequel le plot 3 est creux. Le plot 3 est percé avant la mise en contact des pièces 1, 4. Il permet le passage de tout élément d'assemblage 7, par exemple de type vis, apte à solidariser les pièces 1, 4 ensemble.

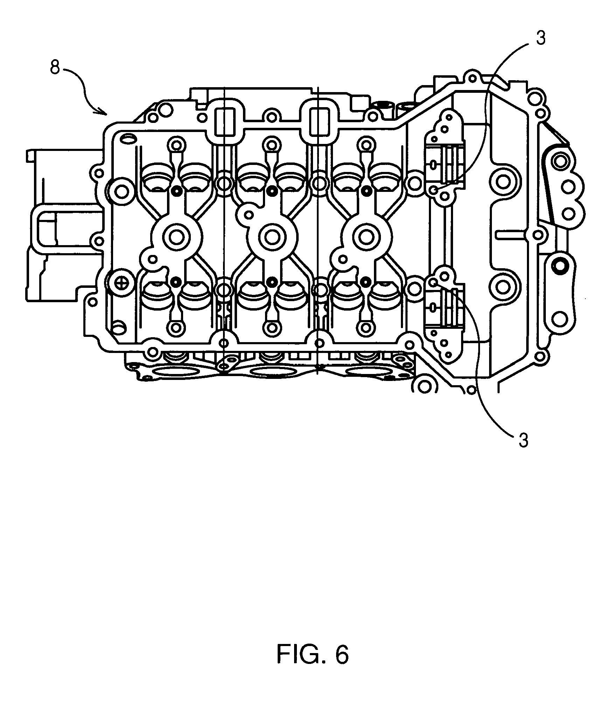

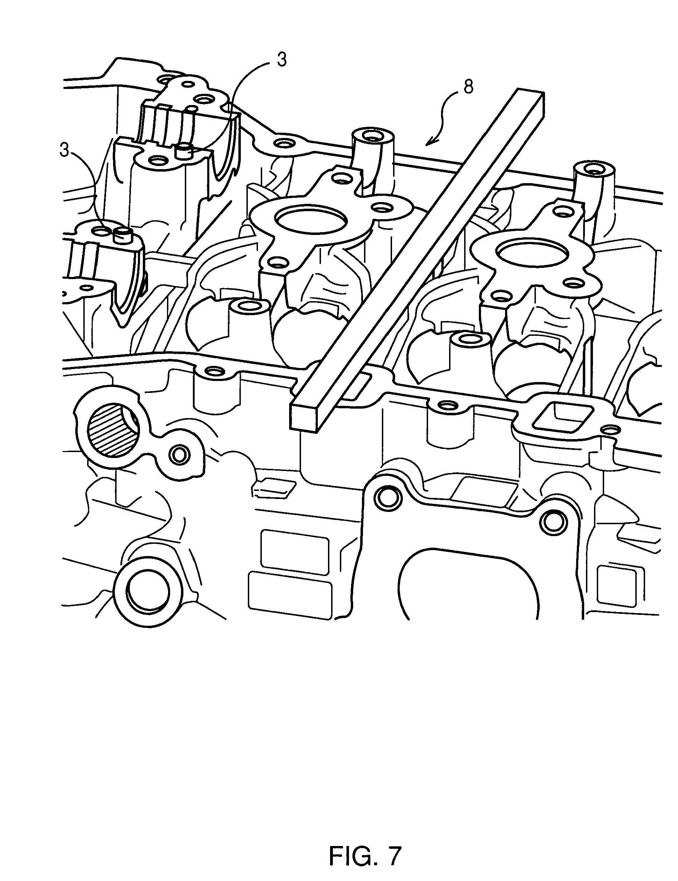

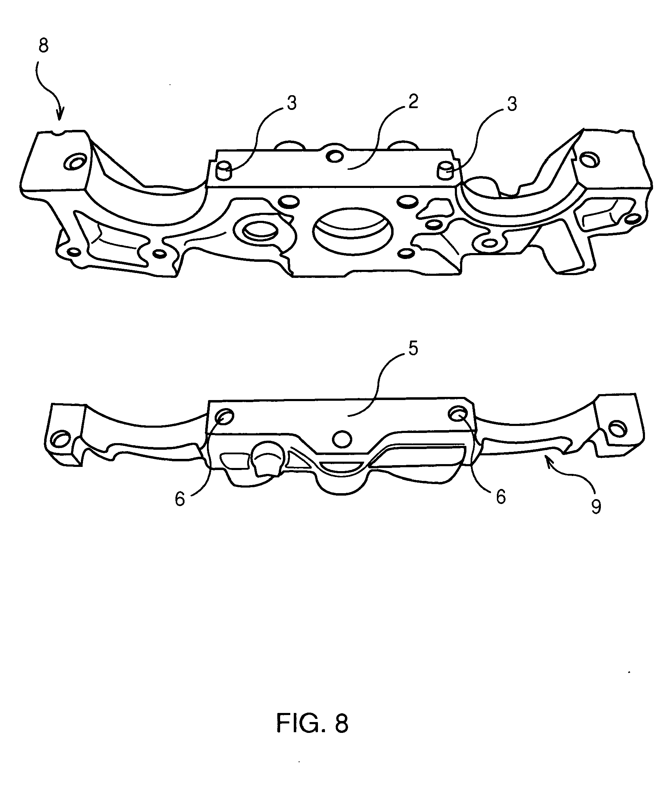

Les figures 6 et 7 représentent un exemple particulier d'assemblage selon l'invention. Elles illustrent une culasse 8 comportant deux plots 3. Les deux plots 3 sont situés sur la même face 2 supérieure de contact de la culasse 8, et vont pouvoir correspondre avec les deux orifices 6, situés sur la face inférieure 5 d'un chapeau de palier d'arbre à came 9 tel qu'illustré à la figure 8, de sorte à immobiliser les deux pièces avant usinage.
La figure 8 représente une culasse 8 et un chapeau de palier d'arbre à came 9, plus précisément, dans cet exemple non limitatif, un chapeau de palier d'arbre à came double pont, les deux pièces étant destinées à être assemblées avant usinage. La culasse 8 comporte deux plots 3 pleins aptes à correspondre chacun avec un orifice 6 situé sur le chapeau de palier d'arbre à came 9. Les orifices 6 sont délardés selon deux directions sensiblement orthogonales. L'ensemble des pièces ainsi assemblées est isostatique.

On notera que, selon l'invention, de multiples combinaisons de délardage sont possibles en fonction du besoin de précision de l'assemblage.

Bien entendu, l'invention ne se limite pas au mode de réalisation décrit et représenté dans les figures jointes et l'homme du métier pourra être amené, grâce à des opérations de routine, à réaliser d'autres modes de réalisation non décrits explicitement, sans sortir du cadre et de la portée de la présente invention.

## Revendications

1. Méthode de positionnement de deux pièces (1, 4) mécaniques de fonderie ou de forge l'une par rapport à l'autre,
on fournit une première pièce (1) mécanique dont une première face (2) est munie d'au moins un plot (3) externe mâle de positionnement intégré au brut de fonderie ou de forge de ladite pièce (1) ;
on fournit une seconde pièce (4) mécanique dont une seconde face (5) est munie d'au moins un orifice (6) de plot femelle de positionnement ; et
on positionne ladite première pièce (1) par rapport à ladite seconde pièce (4) de manière que lesdites première (2) et seconde (5) faces soient en contact et que ledit au moins un plot (3) externe mâle soit positionné en correspondance, dans ledit au moins un orifice (6) de plot femelle, et en ce que la première face (2) de la première pièce (1) est munie de deux plots (3), en ce que la seconde face (5) de la seconde pièce (4) est munie de deux orifices (6), **caractérisée en ce que** :
préalablement au positionnement des pièces, lesdits plots (3) et/ou lesdits orifices (6) sont délardés suivant deux directions sensiblement orthogonales de.manière que l'assemblage desdites pièces soit isostatique.

2. Méthode selon la revendication 1, **caractérisée en ce que**, préalablement au positionnement des pièces (1, 4), ledit au moins un plot (3), intégré au brut de fonderie ou de forge, est usiné.

3. Méthode selon l'une des revendications 1 ou 2, **caractérisée en ce que** ledit au moins un plot (3) est sensiblement cylindrique de révolution.

4. Méthode selon l'une des revendications précédentes, **caractérisée en ce que** le plot externe mâle de positionnement (3) est creux et **en ce qu'**un élément d'assemblage (7) est introduit dans le creux dudit plot (3) pour l'assemblage des pièces (1, 4).

5. Méthode selon l'une des revendications précédentes, **caractérisée en ce que** le plot externe mâle de positionnement (3) est en aluminium.

6. Assemblage de pièces (1, 4) mécaniques automobiles, avec une première pièce (1) mécanique dont une première face (2) est munie d'au moins un plot (3) externe mâle de positionnement intégré au brut de fonderie ou de forge de ladite pièce (1) ; et une seconde pièce (4) mécanique dont une seconde face (5) est munie d'au moins un orifice (6) de plot femelle de positionnement ; avec un positionnement de ladite première pièce (1) par rapport à ladite seconde pièce (4) de manière que lesdites première (2) et seconde (5) faces soient en contact et que ledit au moins un plot (3) externe mâle soit positionné en correspondance, dans ledit au moins un orifice (6) de plot femelle, et en ce que la première face (2) de la première pièce (1) est munie de deux plots (3), en ce que la seconde face (5) de la seconde pièce (4) est munie de deux orifices (6),
et, préalablement au positionnement des pièces, lesdits plots (3) et/ou lesdits orifices (6) ayant été délardés suivant deux directions sensiblement orthogonales de manière que l'assemblage desdites pièces soit isostatique.

7. Assemblage selon la revendication 6, **caractérisé en ce que** les pièces (1, 4) sont des culasses, des carters moteurs, des porte-arbres à cames, des paliers d'arbre à came, des carters de boîte de vitesse.

8. Assemblage selon la revendication 6, **caractérisé en ce qu'**il comprend une culasse (8) et un chapeau de palier d'arbre à came double pont (9).

9. Assemblage selon la revendication 6, **caractérisé en ce que** les pièces (1, 4) sont des pièces de support moteur ou des accessoires.

## Patentansprüche

1. Verfahren zur Positionierung von zwei mechanischen Gießerei- oder Schmiedeteilen (1, 4) zueinander,
wobei man einen ersten mechanischen Teil (1) bereitstellt, von dem eine erste Seite (2) mit mindestens einem externen Positionierungsstift (3), der in den Gießerei- oder Schmiederohteil (1) integriert ist, versehen ist,
man einen zweiten mechanischen Teil (4) bereitstellt, von dem eine zweite Seite (5) mit mindestens einer Positionierungsbuchsenöffnung (6) versehen ist, und
man den ersten Teil (1) in Bezug zu dem zweiten Teil (4) derart positioniert, dass die erste (2) und die zweite (5) Seite in Berührung sind, und dass der mindestens eine externe Positionierungsstift (3) in Entsprechung in der mindestens einen Positionierungsbuchsenöffnung (6) positioniert ist, und dass die erste Seite (2) des ersten Teils (1) mit zwei Stiften (3) versehen ist, und dass die zweite Seite (5) des zweiten Teils (4) mit zwei Öffnungen (6) versehen ist, **dadurch gekennzeichnet, dass**
die Stifte (3) und/oder die Öffnungen (6) vor dem Positionieren der Teile entlang von zwei im Wesentlichen orthogonalen Richtungen abgekantet werden, so dass das Zusammenfügen der Teile isostatisch ist.

2. Verfahren nach Anspruch 1, **dadurch gekennzeichnet, dass** vor dem Positionieren der Teile (1, 4) der mindestens eine Stift (3), der in den Gießerei- oder Schmiederohteil integriert ist, bearbeitet wird.

3. Verfahren nach einem der Ansprüche 1 oder 2, **dadurch gekennzeichnet, dass** der mindestens eine Stift (3) im Wesentlichen rotationszylindrisch ist.

4. Verfahren nach einem der vorhergehenden Ansprüche, **dadurch gekennzeichnet, dass** der externe Positionierungsstift (3) hohl ist, und dass ein Zusammenfügeelement (7) in den Hohlraum des Stifts (3) für das Zusammenfügen der Teile (1, 4) eingeführt wird.

5. Verfahren nach einem der vorhergehenden Ansprüche, **dadurch gekennzeichnet, dass** der externe Positionierungsstift (3) aus Aluminium besteht.

6. Baugruppe aus mechanischen Automobilteilen (1, 4) mit einem ersten mechanischen Teil (1), von dem eine erste Seite (2) mit mindestens einem externen Positionierungsstift (3) versehen ist, der in den Gießerei- oder Schmiederohteil des Teils (1) integriert ist, und einen zweiten mechanischen Teil (4), von dem eine zweite Seite (5) mit mindestens einer Positionierungsbuchsenöffnung (6) versehen ist, mit einer Positionierung des ersten Teils (1) in Bezug zu dem zweiten Teil (4) derart, dass die erste (2) und zweite (5) Seite in Berührung sind, und dass der mindestens eine externe Positionierungsstift (3) in Entsprechung in der mindestens einen Positionierungsbuchsenöffnung (6) positioniert ist, und dass die erste Seite (2) des ersten Teils (1) mit zwei Stiften (3) versehen ist, und dass die zweite Seite (5) des zweiten Teils (4) mit zwei Öffnungen (6) versehen ist,
und dass die Stifte (3) und/oder die Öffnungen (6) vor dem Positionieren der Teile entlang von zwei im Wesentlichen orthogonalen Richtungen derart abgekantet wurden, dass das Zusammenfügen der Teile isostatisch ist.

7. Baugruppe nach Anspruch 6, **dadurch gekennzeichnet, dass** die Teile (1, 4) Zylinderköpfe, Motorgehäuse, Nockenwellenträger, Nockenwellenlager, Schaltgetriebegehäuse sind.

8. Baugruppe nach Anspruch 6, **dadurch gekennzeichnet, dass** sie einen Zylinderkopf (8) und einen Doppelbrücken-Nockenwellen-Lagerdeckel (9) aufweist.

9. Baugruppe nach Anspruch 6, **dadurch gekennzeichnet, dass** die Teile (1, 4) Motortragteile oder Zubehörteile sind.

## Claims

1. A method for positioning two mechanical foundry or forge parts (1, 4) relative to each other,
a first mechanical part (1) is supplied, a first surface (2) of which is provided with at least one male outer positioning contact pad (3) integrated into the foundry or forge blank of the said part (1);
a second mechanical part (4) is supplied, a second surface (5) of which is provided with at least one opening (6) of a female positioning contact pad; and the said first part (1) is positioned relative to the said second part (4) so that the said first (2) and second (5) surfaces are in contact and that the said at least one male outer positioning contact pad (3) is correspondingly positioned in the said at least one opening (6) of the female contact pad, and in that the first surface (2) of the first part (1) is provided with two contact pads (3), in that the second surface (5) of the second part (4) is provided with two openings (6), **characterized in that**
prior to the positioning of the parts, the said contact pads (3) and/or the said openings (6) are rounded off along two substantially orthogonal directions such that the assembly of the said parts is isostatic.

2. The method according to Claim 1, **characterized in that** prior to the positioning of the parts (1, 4), the said at least one contact pad (3), integrated into the foundry or force blank, is machined.

3. The method according to one of Claims 1 or 2, **characterized in that** the said at least one contact pad (3) is substantially cylindrical by revolution.

4. The method according to one of the preceding claims, **characterized in** the male outer positioning contact pad (3) is hollow and **in that** an assembly element (7) is introduced into the hollow of the said contact pad (3) for the assembly of the parts (1, 4).

5. The method according to one of the preceding claims, **characterized in that** the male outer positioning contact pad (3) is made of aluminium.

6. An assembly of mechanical automobile parts (1, 4), with a first mechanical part (1), a first surface (2) of which is provided with at least one male outer positioning contact pad (3) integrated into the foundry or forge blank of the said part (1); and a second mechanical part (4), a second surface (5) of which is provided with at least one opening (6) of a female positioning contact pad; with a positioning of the said first part (1) with respect to the said second part (4) so that the said first (2) and second (5) surfaces are in contact and that the said at least one male outer positioning contact pad (3) is correspondingly positioned in the said at least one opening (6) of the female contact pad, and in that the first surface (2) of the first part (1) is provided with two contact pads (3), in that the second surface (5) of the second part (4) is provided with two openings (6),
and, prior to the positioning of the parts, the said contact pads (3) and/or the said openings (6) having been rounded off along two substantially orthogonal directions so that the assembly of the said parts is isostatic.

7. The assembly according to Claim 6, **characterized in that** the parts (1, 4) are cylinder heads, crankcases, camshaft carriers, camshaft bearings, gearbox cases.

8. The assembly according to Claim 6, **characterized in that** it includes a cylinder head (8) and a double bridge camshaft bearing cap (9).

9. The assembly according to Claim 6, **characterized in that** the parts (1, 4) are engine support parts or accessories.
